# FASCICULE DE BREVET EUROPEEN

(11) **EP 2 906 988 B1**
(45) Date de publication et mention de la délivrance du brevet: **05.09.2018**
(21) Numéro de dépôt: 13805429.1
(22) Date de dépôt: 17.10.2013
(51) Int. Cl.: G02B 27/01, H04N 9/31

(54) **DISPOSITIF ET PROCEDE D'AFFICHAGE TETE HAUTE**
HEAD-UP ANZEIGE UND VERFAHREN HIERFÜR
HEAD-UP DISPLAY AND METHOD THEREFORE

(30) Priorité: 10.10.2012 FR 1259637; 17.10.2012 FR 1259884
(43) Date de publication de la demande: 19.08.2015
(73) Titulaire: Renault S.A.S., 92100 Boulogne-Billancourt (FR)
(72) Inventeur: POULIQUEN, Mamy, F-92170 Vanves (FR); CARREAU, Vincent, F-75014 Paris (FR); LESACHEY, Xavier, F-78340 Les Clayes Sous Bois (FR); LOEILLET, Jean-Jacques, F-31400 Toulouse (FR)
(86) Numéro de dépôt international: PCT/FR2013/052480
(87) Numéro de publication internationale: WO 2014/057231

(56) Documents cités:
- EP-A2- 0 806 693
- EP-A2- 2 351 668
- US-A1- 2008 158 510

## Description

### DOMAINE TECHNIQUE DE L'INVENTION

La présente invention se rapporte au domaine des dispositifs de visualisation tête haute, plus communément appelé HUD acronyme de « Head Up Display ».

De tels dispositifs sont généralement mis en oeuvre dans des cockpits d'avion, de trains ou encore de navires mais également dans des véhicules automobiles (voitures, camions, etc.).

### ÉTAT DE LA TECHNIQUE

Les moyens de locomotions actuels sont de plus en plus équipés de systèmes électroniques d'assistance à la conduite pour une plus grande sécurité et un plus grand confort du conducteur.

De tels systèmes se rapportent par exemple à des dispositifs d'affichage frontaux du type à visualisation tête haute ou HUD. Ce type de dispositif, en améliorant l'accessibilité par le conducteur à des informations relatives au véhicule, offre ainsi une conduite plus sécuritaire en réduisant l'excursion du regard entre la conduite et les informations affichées.

Il est connu que de telles informations puissent être affichées selon différent type d'afficheur.

En effet, dans l'état de l'art ces afficheurs peuvent se rapporter par exemple à un écran de technologie LCD (acronyme en langue anglaise de « liquid crystal display », signifiant en français «écran à cristaux liquide ») positionné au-dessus du volant.

Cependant, un tel emplacement à l'intérieur du véhicule pose des problèmes liés à des contraintes architecturales, ergonomiques et réglementaires.

Ces afficheurs peuvent également se rapporter à ceux de dispositifs tête haute décrits dans les documents WO2010139889 ou encore FR2914070. En effet, ces dispositifs sont configurés pour diffuser des informations via une lame de verre partiellement réfléchissante ou encore sur une partie et/ou une zone spécifique d'un pare-brise, d'un véhicule, spécialement traitée pour assurer un rendu d'informations projetées optiquement à partir d'une boîte à lumière.

Mais de tels dispositifs ont pour inconvénients majeurs d'être très volumineux du fait notamment qu'ils sont constitués d'une boîte à lumière particulière qui requiert un volume important sous la planche de bord.

De plus, avec la démocratisation des aides à la conduite et des alertes associées aux systèmes embarqués, les afficheurs actuels et plus particulièrement la planche de bord deviennent limités : manque de place, réduction de la taille des éléments affichés, problème de lisibilité de l'information, problème de discrimination des éléments, etc.

La présente invention vise à résoudre ces problèmes résultant des inconvénients de l'état de l'art.

### DIVULGATION DE L'INVENTION

L'invention vise à résoudre le problème lié à la réduction de l'encombrement des dispositifs d'affichage tête haute, tout en améliorant la lisibilité des informations qu'ils sont susceptibles d'afficher.

Dans ce dessein, un aspect de l'invention se rapporte à un dispositif d'affichage tête haute, pour afficher au moins une image, comportant :
- un moyen de projection pour générer un faisceau lumineux chargé d'une image à afficher ;
- un écran partiellement réfléchissant comportant au moins une zone d'affichage proche sensiblement transparente et une zone d'affichage lointain partiellement réfléchissante, la zone d'affichage proche comportant des particules électroluminescentes aptes à émettre un rayonnement lumineux, la zone d'affichage lointain positionnant une image virtuelle à une distance d'au moins un mètre de l'écran partiellement réfléchissant agencées pour afficher ladite image dans le champ de vision d'un utilisateur, et
- un élément actif agencé pour recevoir le faisceau lumineux du moyen de projection et le transmettre alternativement vers les zones d'affichage.

Selon des modes de réalisation particuliers :
- l'élément actif est relié à un module de gestion de caractéristiques du faisceau lumineux qui est apte à synchroniser la variation des propriétés de transmission de la lumière dudit élément actif en fonction des dites caractéristiques ;
- l'élément actif se rapporte à un diffuseur de lumière actif tel qu'un film PDLC ;
- le moyen de projection est un pico projecteur laser ;
- l'élément actif est du type transmissif et est agencé entre le moyen de projection et les zones d'affichage, et
- l'élément actif est du type réflectif et est agencé entre un miroir et le moyen de projection, ledit miroir étant apte à réfléchir le faisceau lumineux provenant de l'élément actif sur le chemin optique vers les zones d'affichage.

L'invention se rapporte également à un procédé d'affichage tête haute, pour afficher au moins une image, comportant les étapes suivantes :
- génération par un moyen de projection d'un faisceau lumineux chargé d'une image à afficher ;
- affichage dans le champ de vision d'un utilisateur de ladite image dans au moins une zone d'affichage proche et une zone d'affichage lointain agencée dans un écran partiellement réfléchissant, et
- une étape de transmission de manière alternative par un élément actif du faisceau lumineux émis par le moyen de projection vers les zones d'affichage.

Avantageusement, le procédé comprend une étape de synchronisation de la variation des propriétés de transmission de la lumière dudit élément actif en fonction des caractéristiques du faisceau lumineux à partir d'un module de gestion desdites caractéristiques relié audit élément actif.

### DESCRIPTION DES FIGURES

D'autres avantages et caractéristiques de l'invention apparaîtront mieux à la lecture de la description d'un mode de réalisation préféré qui va suivre,
- la zone d'affichage proche se rapporte à une zone de l'écran partiellement réfléchissant comportant des particules luminescentes aptes à émettre un rayonnement d'une longueur d'onde comprise dans le domaine du visible après absorption du faisceau lumineux ;
- le moyen de projection est un pico projecteur laser ;
- l'élément actif est du type transmissif et est agencé entre le moyen de projection et les zones d'affichage, et
- l'élément actif est du type réflectif et est agencé entre un miroir et le moyen de projection, ledit miroir étant apte à réfléchir le faisceau lumineux provenant de l'élément actif sur le chemin optique vers les zones d'affichage.

L'invention se rapporte également à un procédé d'affichage tête haute, pour afficher au moins une image, comportant les étapes suivantes :
- génération par un moyen de projection d'un faisceau lumineux chargé d'une image à afficher ;
   - affichage dans le champ de vision d'un utilisateur de ladite image dans au moins une zone d'affichage proche sensiblement transparente et une zone d'affichage lointain partiellement réfléchissante, agencées dans un écran (7) partiellement réfléchissant, la zone d'affichage proche comportant des particules électroluminescentes (32) aptes à émettre un rayonnement lumineux, la zone d'affichage lointain positionnant une image virtuelle à une distance d'au moins un mètre de l'écran (7) partiellement réfléchissant, et
- une étape de transmission du faisceau lumineux émis par le moyen de projection (4) de manière alternative par un élément actif (5) en état de transparence vers la zone d'affichage proche et en état de diffusion vers la zone d'affichage lointain, et
   - une étape de transmission de manière alternative par un élément actif du faisceau lumineux émis par le moyen de projection vers les zones d'affichage.

Avantageusement, le procédé comprend une étape de synchronisation de la variation des propriétés de transmission de la lumière dudit élément actif en fonction des caractéristiques du faisceau lumineux à partir d'un module de gestion desdites caractéristiques relié audit élément actif.

### DESCRIPTION DES FIGURES

D'autres avantages et caractéristiques de l'invention apparaîtront mieux à la lecture de la description d'un mode de réalisation préféré qui va suivre, en référence aux figures ci-dessous, réalisé à titre d'exemple indicatif et non limitatif :
La figure 1 représente un pare-brise feuilleté selon un mode de réalisation de l'invention;
La figure 2 décrit le principe d'excitation des particules luminescentes de la zone d'affichage d'un pare-brise selon un mode de réalisation de l'invention ;
La figure 3 représente un schéma optique de la création d'une image virtuelle au niveau de la zone partiellement réfléchissante du pare-brise selon un mode de réalisation de l'invention ;
La figure 4A représente un élément actif du type transmissif, en état de diffusion de la lumière selon un mode de réalisation de l'invention ;
La figure 4B représente un élément actif du type transmissif, en état de transparence selon un mode de réalisation de l'invention ;
La figure 5A représente un élément actif du type réflectif, en état de diffusion de la lumière selon un mode de réalisation de l'invention ;
La figure 5B représente un élément actif du type réflectif, en état de transparence selon un mode de réalisation de l'invention ;
La figure 6 représente un schéma optique illustrant la construction de deux images parallèles à partir d'un unique moyen de projection selon un mode de réalisation de l'invention;
La figure 7 représente un diagramme relatif à la création d'une image entrelacée à partir d'un flux d'information selon un mode de réalisation de l'invention ;
La figure 8A décrit le principe d'entrelacement d'images selon un mode de réalisation de l'invention ;
La figure 8B représente un schéma illustrant l'adressage des images en mode image entrelacée selon un mode de réalisation de l'invention ;
La figure 9 décrit le principe d'entrelacement d'images de dimensions différentes selon un mode de réalisation de l'invention ;
La figure 10 représente un schéma illustrant l'adressage des images en mode image alternée selon un mode de réalisation de l'invention ;
La figure 11 illustre un moyen de projection avec un élément actif selon un mode de réalisation de l'invention ;
La figure 12 représente un schéma optique illustrant une projection d'une image virtuelle et une réflexion d'une source excitatrice issue d'un unique moyen de projection selon un mode de réalisation de l'invention, et
La figure 13 représente le positionnement des zones d'affichage selon un mode de réalisation de l'invention.

### MODES DE REALISATION DE L'INVENTION

Le dispositif d'affichage tête haute, pour afficher au moins une image, comporte :
• au moins un moyen de projection 4 pour générer un faisceau lumineux chargé d'une image à afficher ;
• un écran 7 partiellement transparent et partiellement réfléchissant comportant au moins une zone d'affichage proche et une zone d'affichage lointain agencée pour afficher ladite image dans le champ de vision d'un utilisateur, et
• un système optique définissant un chemin optique entre le projecteur et l'une des zones d'affichage pour diriger le faisceau lumineux sur la zone d'affichage.
• un miroir non plan qui permet d'augmenter la distance du chemin optique.
• un élément de diffusion de lumière sur lequel est créée l'image initiale qui est transmise tout au long du chemin optique. Selon la technologie employée, cet élément de diffusion peut être situé dans le projecteur 4.

Le moyen de projection 4 se rapporte de manière non exhaustive à : tout moyen de projection 4 utilisé de manière générale dans les dispositifs d'affichage tête haute classiques. Par exemple, un dispositif à base de cristaux liquides actifs rétro éclairés en transmission, un dispositif à base de cristaux liquides actifs rétro éclairés en réflexion ou un pico projecteur intégrant une matrice de micro miroirs réfléchissant une source lumineuse, ou encore un pico projecteur laser.

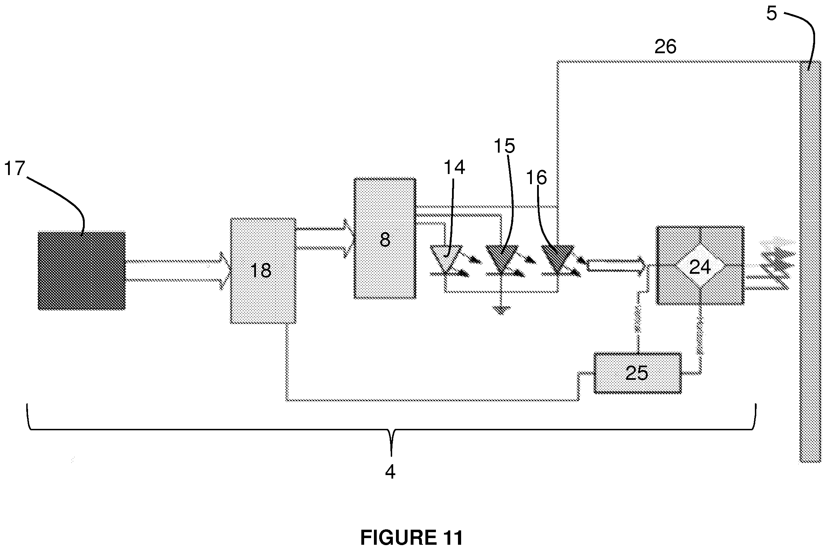

La figure 11 représente un pico projecteur laser qui correspond à un vidéoprojecteur de faible taille.
Ce pico projecteur comporte notamment un module d'entrée du signal vidéo 17, un module de logique intégrée 18, un module de gestion 8, un MEMS 24 (acronyme de « Micromechanical systems », qui signifie en français « systèmes microélectromécaniques ») et un module 25 de contrôle du balayage horizontal/vertical.

Dans une variante, deux ou plusieurs MEMS peuvent être utilisés à la place du MEMS 24. Chacun des MEMS est utilisé pour une direction donnée de l'espace.

Ce module de gestion 8 est relié aux trois sources lumineuses 14, 15, 16, de longueur d'onde différente, comprises dans ce pico projecteur. Le module de gestion 8 est également connecté à un élément actif 5 à partir de liaison 26.

Ce module de gestion 8 est apte à piloter chacune des trois sources lumineuses 14, 15, 16, ainsi que l'élément actif 5. Dans le dispositif d'affichage tête haute, cet élément actif 5 est agencé pour recevoir un faisceau lumineux du moyen de projection 4 et le transmettre alternativement vers les zones d'affichage.

Dans le cadre de son fonctionnement, le pico projecteur laser est apte à reconstituer une image point par point avec un faisceau laser dévié. La déviation du faisceau laser peut se faire avec un microsystème électronique et mécanique MEMS comme par exemple un micro miroir. La mise en oeuvre de telles technologies MEMS dans des pico projecteurs sont décrites dans les documents WO2012000556 et US2012013855.

Les moyens de projection 4, comme les pico projecteurs, comprennent trois sources lumineuses laser qui sont intégrées dans un élément optique où chacun des faisceaux laser est aligné en sortie à l'aide de miroirs centrés en longueur d'onde, comme par exemple des miroirs dichroïques. Chaque laser, compris dans ce moyen de projection 4, est susceptible d'adresser un domaine spectral afin de permettre une restitution en couleur des images :
- 800nm à 620nm pour le rouge,
- 560nm à 492 pour le vert, et
- 482nm à 445 pour le bleu.

Ainsi, différentes sources de lumière de longueur d'onde différentes sont regroupées au sein d'un unique moyen de projection.

Dans ce dispositif d'affichage tête haute, l'écran 7 se rapporte par exemple à un pare-brise 7 de véhicule essentiellement transparent, notamment à l'égard de rayons lumineux en provenance de l'extérieur du véhicule. Ce pare-brise ou écran 7 comporte des zones d'affichage de différents types de restitution d'un faisceau lumineux. Une zone d'affichage proche, sensiblement transparente, comporte des particules électroluminescentes 32 aptes à émettre un rayonnement lumineux. Une zone d'affichage lointain est partiellement réfléchissante, notamment à l'égard d'un faisceau lumineux en provenance de l'intérieur du véhicule. En comprenant de telles zones ayant des propriétés différentes de restitution d'un faisceau lumineux, comprenant une propriété de réflexion, l'écran 7 correspond à un écran partiellement réfléchissant.

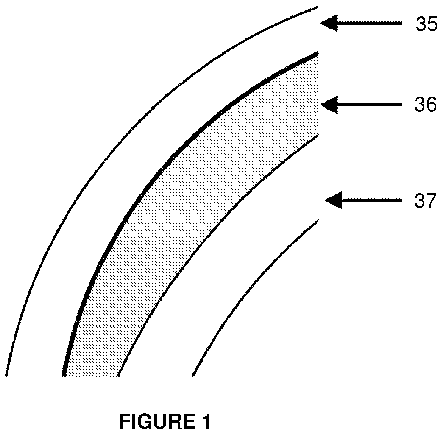

En effet une zone d'affichage proche se rapporte par exemple à une zone du pare-brise 7 transparent qui comporte des particules luminescentes 32 aptes à émettre un rayonnement 33 d'une longueur d'onde comprise dans le domaine du visible après absorption du faisceau lumineux 34. En effet, cette zone du pare-brise est obtenue en utilisant des particules luminescentes 32 qui sont dissoutes dans le PVB (acronyme de polyvinylbutyral) ou incluses dans un film collé en surface d'une des surfaces vitrées du pare-brise 7. Dans le cadre d'un pare-brise 7 feuilleté, celui-ci est constitué de deux feuilles de verre 35, 37 associées par une feuille thermoplastique en PVB 36, ainsi qu'il est illustré en figure 1.
Les molécules photoluminescentes sont intégrées dans la couche PVB 36 sur la base de mécanismes d'inclusion qui sont sensiblement similaires à ceux décrits dans les documents FR2914070B1, FR2929016A1 ou encore FR2929017A1.

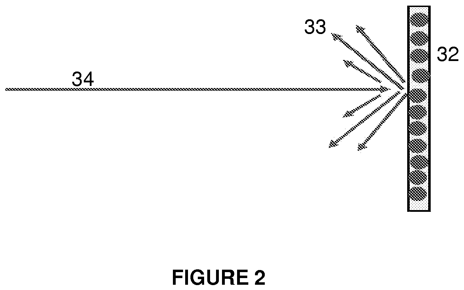

La figure 2, illustre ces particules luminescentes 32 qui sont excitées par un rayonnement incident 34 d'une certaine longueur d'onde et émettent un rayonnement 33 d'une autre longueur d'onde plus longue qui s'inscrit dans le domaine du visible, après absorption du rayonnement de la première longueur d'onde.

On notera ainsi que nous l'avons vu précédemment que pour une surface incluant des particules luminescentes, la lumière excitatrice doit avoir une longueur d'onde plus courte que la lumière qui sera réémise et visible. Elle est donc potentiellement dans le domaine de l'ultraviolet et donc invisible. Dans ce cas, l'image est reconstituée dans le plan des particules photo-sensibles, c'est-à-dire le plan du pare-brise 7.

Avantageusement, l'image affichée dans une telle zone est visible par toutes les personnes dont le champ de vision couvre le pare-brise 7. On notera que pour être visible par toutes ces personnes, cette zone du pare-brise 7 peut également être réalisée par l'adjonction d'une surface réfléchissante ou encore par une position relative des éléments telle que l'image créée par le système soit dans le champ de vision de toutes ces personnes à travers le pare-brise 7.

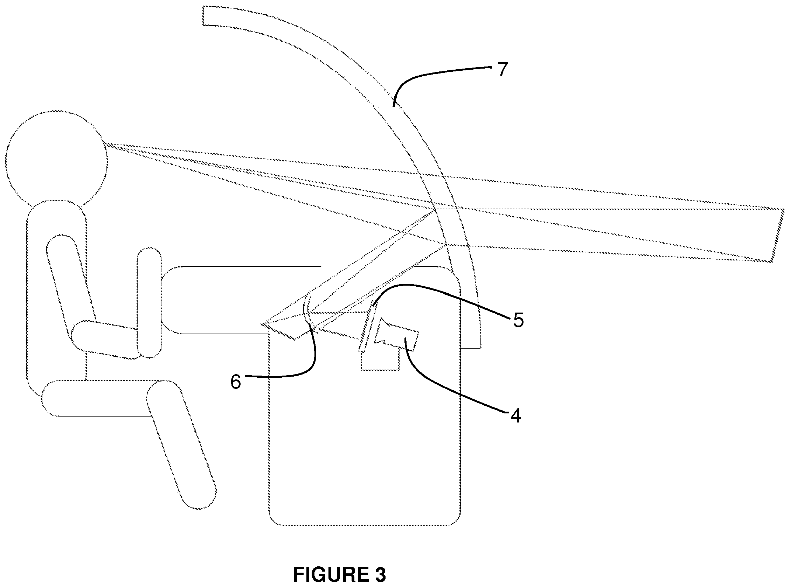

Une zone d'affichage lointain peut se rapporter, par exemple, à une zone du pare-brise 7 partiellement réfléchissante. Cette zone d'affichage est agencée de façon à positionner une image virtuelle à une distance d'au moins 1 m de l'écran 7 partiellement réfléchissant, ainsi qu'il est illustré en figure 3. Pour ce faire, le moyen de projection émet une lumière visible, et l'image est alors focalisée au-delà de ce pare-brise 7. Cette image n'est généralement visible que du conducteur.

En fonction de la zone d'affichage, les caractéristiques du faisceau lumineux émis par le moyen de projection 4 varient.

Lorsque la zone d'affichage se rapporte à la zone de l'écran 7 transparent comportant des particules luminescentes, la longueur d'onde du faisceau lumineux, ou faisceau excitateur dans ce cas précis, est inférieure à celle du faisceau lumineux qui sera émis l'écran, ici le pare-brise. Autrement dit, pour une émission dans le visible au niveau de l'écran, c'est à dire le pare-brise, les longueurs d'ondes du faisceau lumineux (ou excitateur) sont potentiellement dans le domaine de l'ultraviolet mais aussi dans le domaine du visible dans une longueur d'onde courte.
Lorsque la zone d'affichage correspond à la zone partiellement réfléchissante, ces longueurs d'ondes sont comprises entre 400 à 800nm.

Dans un mode de réalisation, le dispositif d'affichage tête haute comporte plusieurs moyens de projections 4. Chaque moyen de projection 4 est associé à une zone d'affichage à partir d'un système optique définissant un chemin optique entre chaque moyen de projection et cette zone d'affichage, pour y diriger le faisceau lumineux.

Un véhicule comportera, de manière non exhaustive, deux moyens de projection distincts implantés de manière différente dans le véhicule, pour deux zones d'affichage.

Un premier moyen de projection, tel que tout moyen de projection 4 utilisé de manière générale dans les dispositifs d'affichage tête haute classiques sera utilisé pour la projection d'une image dans le plan lointain sur une zone du pare-brise 7 partiellement réfléchissante, et un deuxième moyen de projection tel qu'un pico projecteur laser pour adresser les particules luminescentes de la zone d'affichage du pare-brise 7.

Dans un autre mode de réalisation, contrairement au mode de réalisation précédent, le dispositif d'affichage tête haute ne comporte qu'un unique moyen de projection pour afficher une image sur au moins deux zones d'affichage.

Dans ce mode de réalisation, le moyen de projection pour générer un faisceau lumineux chargé d'une image à afficher se rapporte par exemple à un pico projecteur. Ce dispositif comporte également, un élément actif 5 agencé pour recevoir le faisceau lumineux du moyen de projection et le transmettre sur le chemin optique vers les zones d'affichage. Cet élément actif 5 est relié à un module de gestion des caractéristiques du faisceau lumineux et est apte à synchroniser la variation des propriétés de transmission de la lumière dudit élément actif 5 en fonction desdites caractéristiques. Ce module de gestion est compris dans le moyen de projection et est apte à piloter les différentes sources lumineuses comprises dans le moyen de projection ainsi que l'élément actif 5.

Cet élément actif 5 se rapporte par exemple à un diffuseur actif de lumière actif tel qu'un film PDLC (acronyme de « Polymer dispersed liquid crystal », qui signifie en français « cristal liquide dispersé dans du polymère »). Ce film PDLC contient un mélange de cristaux liquides et de polymères qui ont des propriétés d'alignement variable en fonction de la polarisation électrique desdits cristaux.

Cet élément actif 5 est localisé en aval du moyen de projection. Lorsqu'une polarisation électrique est générée par le module de gestion, le film PDLC est alors transparent. A l'inverse, s'il n'y a pas de polarisation électrique, le film diffuse la lumière émise par le moyen de projection. Ainsi l'élément actif 5 peut alterner entre deux états : transparent ou diffusant.

Lorsque le moyen de projection 4 est un pico projecteur laser, l'image source devient alors celle sur le plan du diffuseur actif quand celui-ci est diffusant et les rayons lumineux passent à travers du diffuseur actif sans être déviés quand il est transparent.

Ainsi, en reliant cet élément actif 5 à un module de gestion 18, il est alors possible de discriminer deux zones affichage avec un unique moyen de projection 4.

En effet, le module de gestion 18 permet de synchroniser la source d'alimentation du moyen de projection 4 avec la source de polarisation électrique du diffuseur de lumière actif.

Par exemple en synchronisant la source de polarisation électrique du diffuseur de lumière actif et la source d'alimentation du moyen de projection, ici une source excitatrice des luminophores de la zone du pare-brise 7 qui comporte des particules luminescentes, on obtient une image diffuse sur le diffuseur actif pour l'image focalisée dans le plan lointain de la zone du pare-brise 7 partiellement réfléchissante et aucune image sur le diffuseur pour l'image dans le plan du pare-brise 7 qui se forme directement dans la zone du pare-brise 7 qui comporte des particules luminescentes.

Cet élément actif 5 peut être du type transmissif ou réflectif.

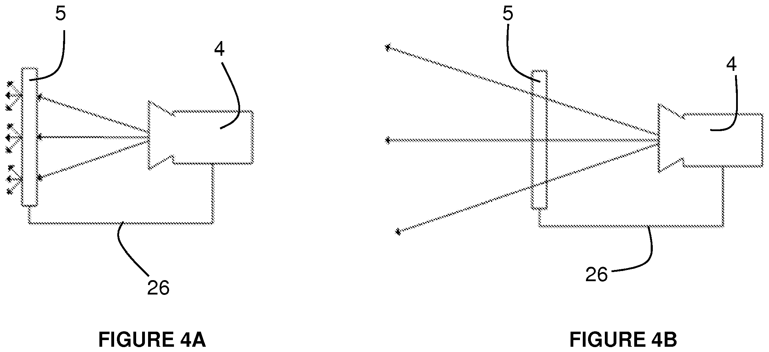

Lorsque l'élément actif 5 est du type transmissif, il est agencé entre le moyen de projection 4 et les zones d'affichage, ainsi qu'il est représenté aux figures 4A et 4B. Selon la zone d'affichage adressée, l'élément actif 5 change d'état en étant soit transparent ou soit diffusant la lumière.

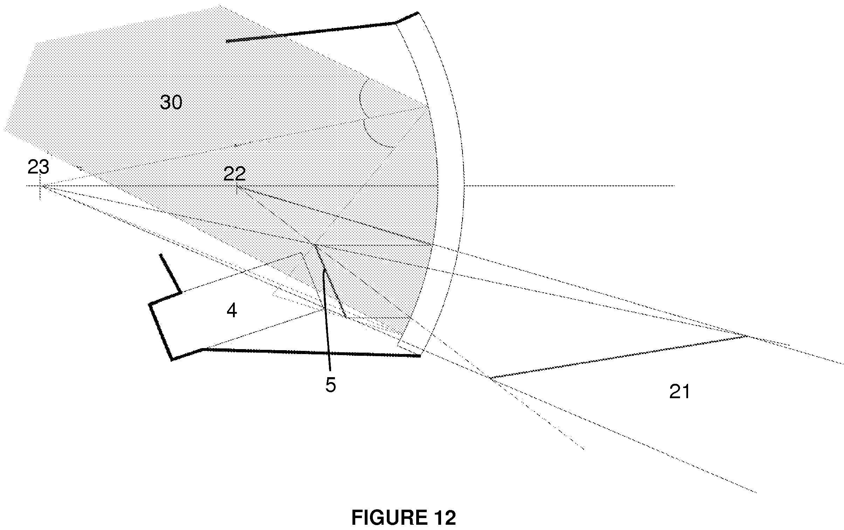

Un exemple d'un ensemble de projection du dispositif est représenté en figure 12. Cet ensemble comporte le moyen de projection 4, un miroir sphérique et un élément actif 5 du type transmissif, lesquels sont agencés de sorte à générer la projection d'une image virtuelle 21 et la réflexion d'une source excitatrice issue d'une source commune. La zone 30 de l'ensemble de projection est couverte par le balayage excitateur après réflexion par le miroir sphérique. Les points 23 et 22 correspondent respectivement au centre de la courbure du miroir sphérique et au point focal objet du ce miroir.

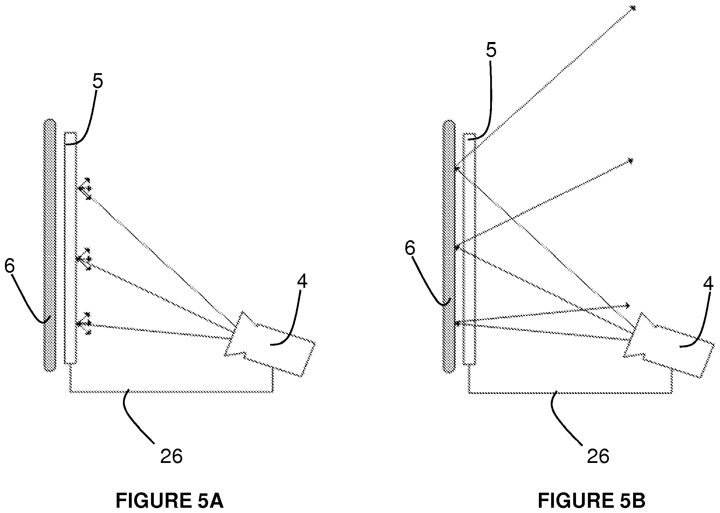

Aux figures 5A et 5B est illustré un élément actif 5 du type réflectif qui est agencé entre un miroir 6 et le moyen de projection 4. Dans cette configuration, le moyen de projection 4 et les zones d'affichage sont situés du même côté par rapport à l'élément actif 5.

Le miroir 6 permet ainsi de réfléchir le faisceau lumineux provenant de l'élément actif 5 sur le chemin optique vers les zones d'affichage.

On comprend bien que lorsque l'élément actif 5 est dans l'état diffusant, il ne laisse pas passer la lumière. Ainsi, la lumière est toujours émise vers la zone d'affichage quel que soit l'état de l'élément actif 5.

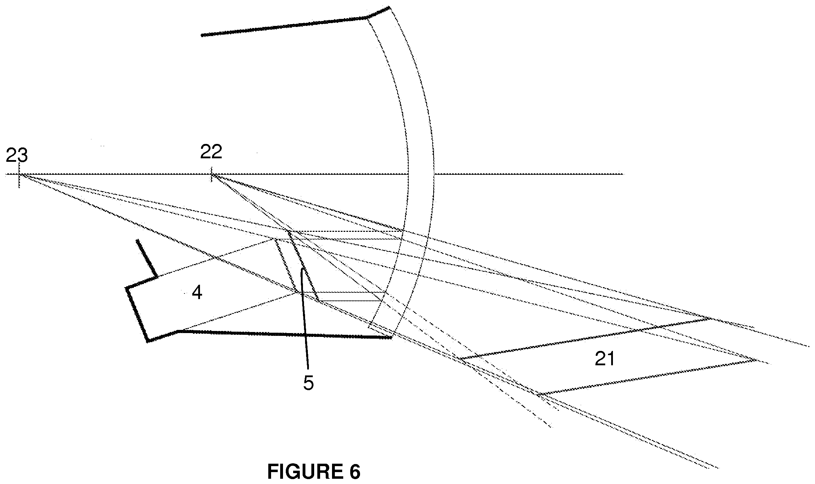

Ce dispositif d'affichage tête haute permet à partir notamment de l'élément actif 5 du type transmissif ou réflectif, de générer des images en parallèles focalisées dans des plans lointains de la zone d'affichage du pare-brise 7 partiellement réfléchissante. En effet, à la figure 6, l'ensemble de projection du dispositif qui est représenté comprend le moyen de projection 4, des éléments actifs 5 et un miroir sphérique. Ce moyen de projection 4, qui est par exemple ici un pico-projecteur laser couleur, est apte à créer des images sur les éléments actifs 5 alternativement transparents. Ainsi, des images sont générées sur plusieurs plans qui vont créer des sources d'images à différentes positions qui après passage dans une optique vont créer des images virtuelles parallèles 21 sur différents plans de projection.

L'invention se rapporte également à un procédé d'affichage tête haute, pour afficher au moins une image.

Ce procédé comporte les étapes suivantes :
- génération par au moins un moyen de projection 4 d'un faisceau lumineux chargé d'une image à afficher ;
- affichage dans le champ de vision d'un utilisateur de ladite image dans au moins une zone d'affichage prédéterminée agencée dans un écran 7 partiellement réfléchissant, et
- définition par un système optique d'un chemin optique entre le moyen de projection 4 et l'une des zones d'affichage pour diriger le faisceau lumineux sur la zone d'affichage.

Lorsque le procédé est mis en oeuvre par le dispositif d'affichage tête haute comportant plusieurs moyens de projections, chacun étant associé à une zone d'affichage prédéfinie, ce procédé comporte alors une étape de synchronisation des moyens de projections coopérants chacun avec chaque zone d'affichage dudit écran 7, étape de synchronisation qui est réalisée à partir du module de gestion 18.

Dans le cas où le dispositif d'affichage tête haute ne comporte qu'un unique moyen de projection 4, ce procédé d'affichage comprend les étapes de :
- transmission du faisceau lumineux émis par le moyen de projection 4 vers les zones d'affichage à partir de l'élément actif 5, et
- synchronisation de la variation des propriétés de transmission de la lumière dudit élément actif 5 en fonction des caractéristiques du faisceau lumineux à partir du module de gestion des caractéristiques relié audit élément actif 5.

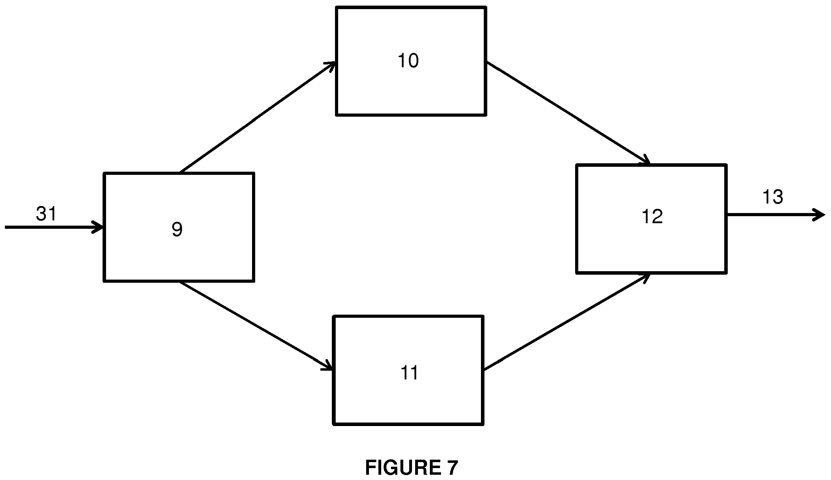

A la figure 7 est représenté un diagramme relatif au mode d'affichage d'images entrelacées dans ce dispositif d'affichage tête haute. Ce dispositif reçoit un flux d'informations 31 à afficher sur chacune des zones d'affichage. Lors d'une étape de traitement 9 de ces informations, le dispositif effectue une séparation des informations en fonction de chacune des zones d'affichage. Lors des étapes de générations 10 et 11 des images à destinations de chacune des zones d'affichages sont créés. Lors d'une étape 12, ces images sont superposées en vue de leur adressage 13 sur les zones d'affichage.

Lors de l'étape de transmission du faisceau lumineux vers l'une ou l'autre des zones d'affichage, la variation des propriétés de transmission de la lumière de l'élément actif 5 permet d'adresser alternativement à chaque zone d'affichage un pixel d'une image à afficher. Cette variation de des propriétés de transmission de la lumière dudit élément actif 5 est réalisée à une fréquence supérieure à 24Hz. Ainsi des images entrelacées sont alors générées et adressées à ces zones d'affichage.

La résolution de chacune de ces images est inférieure à la résolution maximale du dispositif d'affichage. La somme des pixels disponibles dans chacun des axes pour chacune des images est égale au nombre total de pixels sur chacun des axes. On notera que l'on utilise 100% des pixels adressables.

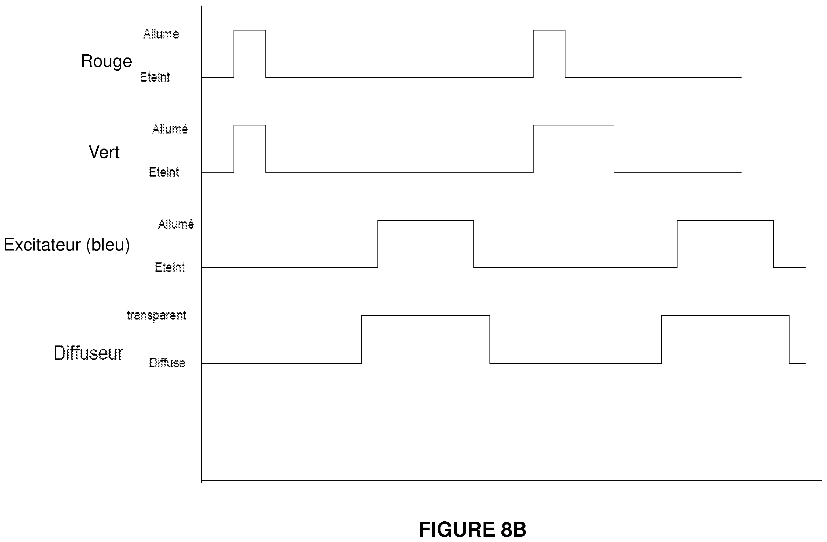

Ainsi que l'illustre la figure 8B, l'affichage d'images entrelacées est associé à un pilotage rapide de l'élément actif 5 par le module de gestion. A chaque changement de zone d'affichage, un changement d'état doit être appliqué à l'élément actif 5 : transparent ou diffusant. Cet affichage d'images entrelacées réalisé à partir du pilotage des sources lumineuses Rouge, Vert et Bleu (excitateur), et de l'élément actif 5 (diffuseur) qui alternent entre un mode allumé et éteint de manière à adresser alternativement un pixel pour chaque zone d'affichage.

Dans un tel contexte, la fréquence de pilotage doit être maximale et donc supérieure au produit du taux de rafraichissement des images (supérieure à 24 Hz, persistance rétinienne) par le nombre total de pixels adressés par le système.

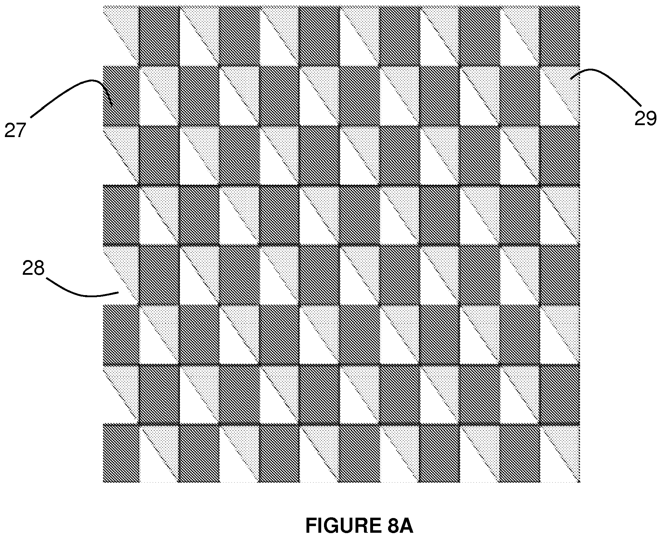

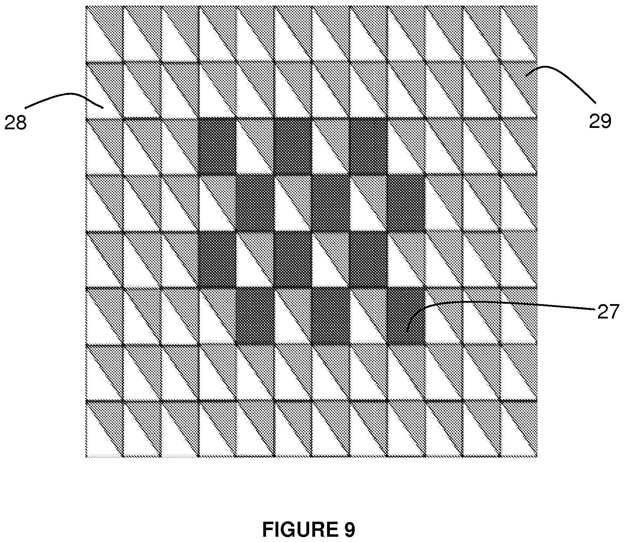

Ce mode d'entrelacement des images mis en oeuvre par ce dispositif est illustré aux figures 8A et 9, dans lesquelles les pixels bleus 27 représentent la source excitatrice des particules luminescentes comprises dans une zone d'affichage du pare-brise 7 et qui sont aptes à émettre un rayonnement d'une longueur d'onde comprise dans le domaine du visible après absorption du faisceau lumineux. Les pixels verts 28 et rouges 29 étant destinés à la zone d'affichage partiellement réfléchissante. A la figure 9, à la différence de la figure 8, les images entrelacées sont de dimensions différentes et sont affichées avec un nombre de pixels différents.

L'avantage de la génération et l'adressage sur les zones d'affichage d'images entrelacées est lié au fait que cela permet de limiter l'affichage dans des régions de chacune des zones d'affichage de façon dynamique. Ainsi, l'affichage d'image peut être limité pour une zone d'affichage au coin supérieur droit de l'image pour une série d'informations et dans le coin inférieur droit pour une autre application.

Dans ce cas, l'excursion du moyen d'affichage dans chacune des régions de ces zones d'affichage et pour chacune des images sera maximale ce qui permet de maximiser l'énergie apportée à chaque région en fonction du moyen de projection 4.

Le mode d'affichage avec des images entrelacées sera utilisé avec des éléments actifs 5 permettant un pilotage à haute fréquence et pour des affichages dans des zones d'affichage distinctes.

D'une autre manière, les images adressées aux zones d'affichage peuvent être des images non-entrelacées ou images alternées. Le mode d'affichage des images est alors un mode d'adressage alterné d'images sur les zones d'affichage.

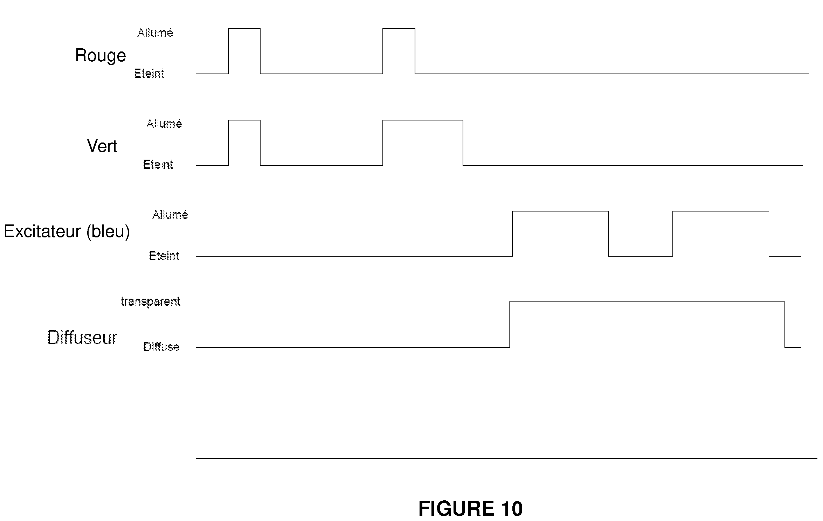

Ainsi que l'illustre la figure 10, dans ce cas, la transmission du faisceau lumineux vers l'une ou l'autre des zones d'affichage est fonction de la variation des propriétés de transmission de la lumière dudit élément actif 5.

A chaque changement de zone d'affichage, un changement d'état doit être appliqué à l'élément actif 5 : transparent ou diffusant. Cet affichage d'images non entrelacées réalisé à partir du pilotage des sources lumineuses Rouge, Vert et Bleu (excitateur), et de l'élément actif 5 (diffuseur). Dans ce contexte la fréquence du moyen de projection 4 est doublée ainsi que l'illustre les sources lumineuses rouge, vert et bleu, avec un affichage alternatif d'une image pour chaque zone d'affichage à partir de l'élément actif.

Lorsque les sources lumineuses rouge et verte sont allumées pour l'adressage d'une image vers la zone d'affichage partiellement réfléchissante alors l'élément actif 5 (le diffuseur) est en mode « diffusant » et lorsque la source lumineuse excitatrice bleu (excitateur) est allumée pour la diffusion d'une image à adresser à la zone du pare-brise 7 comportant des particules luminescentes, l'élément actif 5 (le diffuseur) est en mode « transparent ».

Cette transmission est réalisée avec :
- une fréquence de variation supérieure à 24Hz ;
- une fréquence de génération du faisceau lumineux chargé d'une image à afficher correspondant au double de la fréquence de variation.

Ainsi en doublant la fréquence du moyen de projection 4, une image est alors affichée pour chaque zone d'affichage. Par exemple lorsque l'on affiche une image pour le plan lointain, c'est-à-dire au niveau de la zone du pare-brise 7 partiellement réfléchissante, l'élément actif 5 diffuse l'image. Et lorsqu'une image est affichée dans la zone du pare-brise 7 comportant des particules luminescentes, l'élément actif 5 est transparent.

Dans ce contexte, le moyen de projection 4 doit générer deux fois plus d'images que s'il ne devait afficher qu'une seule image pour une seule zone d'affichage afin de compenser la persistance rétinienne. De même, l'élément actif 5 est activé à une fréquence de fonctionnement au moins égale à la persistance rétinienne, c'est-à-dire égale à la moitié de celle de fonctionnement du moyen de projection 4. Le module de gestion 18 permet de synchroniser le moyen de projection 4 avec l'élément actif 5 de façon à ce que les images, destinées à être affichées dans la zone du pare-brise 7 comportant des particules luminescentes, soient affichées quand l'élément actif 5 est dans l'état transparent.

L'avantage de la génération et l'adressage sur les zones d'affichages d'images non-entrelacées est que l'élément actif 5 ne requiert qu'un pilotage en « basses » fréquences, comme on peut le voir en figure 10. De plus, selon l'utilisation de l'ensemble, il est possible de limiter de façon dynamique à des régions des zones d'affichage dans chacune des zones. Ainsi, on augmente la luminance finale de l'ensemble pour chacune des zones d'affichage.

Le mode d'affichage avec des images non entrelacées sera utilisé avec des éléments actifs 5 ne permettant pas un pilotage à haute fréquence, mais avec un moyen de projection 4 permettant de doubler au moins le nombre d'images affichées par seconde par rapport à la persistance rétinienne.

Ce dispositif d'affichage tête haute améliore l'affichage d'information et le confort de conduite dans des véhicules. Ce dispositif propose une surface d'affichage suffisante pour des informations liées aux informations de navigation et de multimédia, par exemple.

Ce dispositif permet l'affichage d'information sur des zones d'affichages proches, voire dans des zones du pare-brise 7.

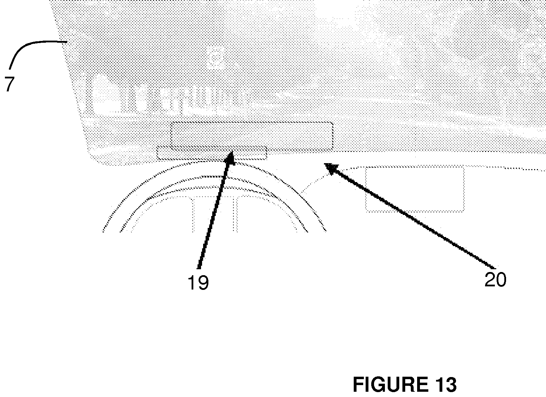

Par exemple, la zone d'affichage proche peut être appropriée pour des informations relatives à la conduite: vitesse véhicule, régulateur/limiteur/ACC, limitation de vitesse. Ainsi que l'illustre la figure 13, cette zone d'affichage peut être positionnée en position dite « Médium » 19 c'est-à-dire dans le champ de vision du conducteur dans la partie basse du pare-brise 7. Cette zone d'affichage correspond de manière non exhaustive à la zone du pare-brise 7 qui comporte des particules luminescentes.

La zone du pare-brise 7 partiellement réfléchissante, dite zone d'affichage lointaine, peut être utilisée pour les informations de sécurité et d'alertes : cible ACC, alerte accident (« Precrash »), alerte de distance (« Distance Warning »), alerte de dérive de la trajectoire. (« Lane Departure Warning »). Ainsi qu'il est représenté à la figure 13, cette zone d'affichage peut être positionnée en position dite « Up » 20 c'est-à-dire dans le champ de vision du conducteur au-dessus de la zone d'affichage proche.

Cette zone peut être également appropriée pour des applications de navigation qui, projetées dans l'environnement, apparaissent en « pseudo réalité augmentée ».

Une nouvelle dimension apparaît avec ces deux zones d'affichage. En effet, il est possible d'utiliser des éléments en mode dynamique.

Par exemple avec une classification d'alertes en 3 niveaux de risque - pas de risque ; risque avéré ; danger avéré. Il est alors possible d'afficher un risque avéré dans la zone d'affichage lointaine et de l'afficher dans la zone d'affichage proche lorsqu'il devient un danger avéré. Lorsqu'il n'y a aucun risque, il n'est pas nécessaire d'afficher l'information pour ne pas distraire le conducteur.

Ainsi, l'intégration de plusieurs zones d'affichage permet d'aider à organiser et prioriser les informations transmises au conducteur. L'établissement de nouvelles règles de hiérarchisation d'informations aidera à la compréhension de ces informations, ainsi que le conducteur dans sa conduite, réduira sa charge mentale en n'affichant que les informations utiles à la conduite et les alertes urgentes dans le plan proche.

Le dispositif d'affichage tête haute selon l'invention peut être mis en oeuvre avec tous types de surfaces transparentes susceptibles de pouvoir afficher des informations comme par exemple des vitrages dans les surfaces commerciales ou les équipements électroniques avec des informations projetées.

## Revendications

1. Dispositif d'affichage tête haute, pour afficher au moins une image, **caractérisé en ce qu'**il comporte :
- un moyen de projection (4) pour générer un faisceau lumineux chargé d'une image à afficher ;
- un écran (7) partiellement réfléchissant comportant au moins une zone d'affichage proche et une zone d'affichage lointain, agencées pour afficher ladite image dans le champ de vision d'un utilisateur, et
- un élément actif (5) ayant des propriétées de pouvoir alterner entre deux états, l'un transparent et l'autre diffusant,
l'élément actif étant agencé pour recevoir le faisceau lumineux du moyen de projection (4) et le transmettre alternativement en état de transparence vers la zones d'affichage proche et en état de diffusion vers la zone d'affichage lointain,
la zone d'affichage proche se rapporte à une zone de l'écran (7) partiellement réfléchissant comportant des particules luminescentes aptes à émettre un rayonnement d'une longueur d'onde comprise dans le domaine du visible après absorption du faisceau lumineux,
la zone d'affichage lointain positionnant une image virtuelle généré par la lumière diffusée par l'élément actif en état de diffusion à une distance d'au moins un mètre de l'écran (7) partiellement réfléchissant.

2. Dispositif d'affichage tête haute selon la revendication précédente, **caractérisé en ce que** ledit élément actif (5) est relié à un module de gestion (18) de caractéristiques du faisceau lumineux qui est apte à synchroniser la variation des propriétés de transmission de la lumière dudit élément actif (5) en fonction des dites propriétés.

3. Dispositif d'affichage tête haute selon l'une des revendications 1 à 2, **caractérisé en ce que** l'élément actif (5) se rapporte à un diffuseur de lumière actif est un film du type cristal liquide dispersé dans du polymère (PDLC).

4. Dispositif d'affichage tête haute selon l'une des revendications précédentes, **caractérisé en ce que** le moyen de projection (4) est un pico projecteur laser.

5. Dispositif d'affichage tête haute selon l'une des revendications 1 à 4, **caractérisé en ce que** l'élément actif (5) est du type transmissif et est agencé entre le moyen de projection (4) et les zones d'affichage.

6. Dispositif d'affichage tête haute selon l'une des revendications 1 à 4, **caractérisé en ce que** l'élément actif (5) est du type réflectif et est agencé entre un miroir et le moyen de projection (4), ledit miroir étant apte à réfléchir le faisceau lumineux provenant de l'élément actif sur le chemin optique vers les zones d'affichage.

7. Procédé d'affichage tête haute, utilisant le dispositif d'affichage de la tête haute de la revendication 1, pour afficher au moins une image, **caractérisé en ce qu'**il comporte les étapes suivantes :
- génération par au moins le moyen de projection (4) d'un faisceau lumineux chargé d'une image à afficher ;
- affichage dans le champ de vision d'un utilisateur de ladite image dans au moins la zone d'affichage proche et la zone d'affichage lointain, agencées dans l'écran (7) partiellement réfléchissant, et
- une étape de transmission du faisceau lumineux émis par le moyen de projection (4) de manière alternative par l'élément actif (5) en état de transparence vers la zone d'affichage proche et en état de diffusion vers la zone d'affichage lointain.

8. Procédé d'affichage tête haute selon la revendication précédente, **caractérisé en ce que** le procédé comprend une étape de synchronisation de la variation des propriétés de transmission de la lumière dudit élément actif (5) en fonction des caractéristiques du faisceau lumineux.

9. Procédé d'affichage tête haute selon l'une des revendications 7 ou 8, **caractérisé en ce que**, dans l'étape de génération, le moyen de projection du faisceau lumineux émet une lumière visible focalisée au-delà de l'écran (7) dans au moins une partie réfléchissante de zone d'affichage, ladite zone étant agencée de façon à positionner l'image virtuelle à une distance d'au moins 1m de l'écran (7), de sorte que l'affichage est lointain.

## Patentansprüche

1. Head-up-Anzeigevorrichtung, um mindestens ein Bild anzuzeigen, **dadurch gekennzeichnet, dass** sie aufweist:
- eine Projektionseinrichtung (4), um einen Lichtstrahl zu erzeugen, der mit einem anzuzeigenden Bild geladen ist;
- einen teilweise reflektierenden Bildschirm (7), der mindestens einen Nahanzeigebereich und einen Fernanzeigebereich aufweist, die eingerichtet sind, um das Bild im Sichtfeld eines Benutzers anzuzeigen,
und
- ein aktives Element (5), das Eigenschaften hat, zwischen zwei Zuständen wechseln zu können, der eine transparent und der andere diffundierend, wobei das aktive Element eingerichtet ist, um den Lichtstrahl von der Projektionseinrichtung (4) zu empfangen und ihn abwechselnd im Transparenzzustand zum Nahanzeigebereich und im Diffusionszustand zum Fernanzeigebereich zu übertragen,
der Nahanzeigebereich bezieht sich auf einen teilweise reflektierenden Bereich des Bildschirms (7), der lumineszierende Teilchen aufweist, die nach Absorption des Lichtstrahls eine Strahlung einer auf dem Gebiet des sichtbaren Bereichs enthaltenen Wellenlänge emittieren können, wobei der Fernanzeigebereich ein virtuelles Bild, das vom durch das vom aktiven Element im Diffusionszustand diffundierte Licht erzeugt wird, in einem Abstand von mindestens einem Meter vom teilweise reflektierenden Bildschirm (7) positioniert.

2. Head-up-Anzeigevorrichtung nach dem vorhergehenden Anspruch, **dadurch gekennzeichnet, dass** das aktive Element (5) mit einem Verwaltungsmodul (18) von Merkmalen des Lichtstrahls verbunden ist, das die Änderung der Übertragungseigenschaften des Lichts des aktiven Elements (5) abhängig von den Eigenschaften synchronisieren kann.

3. Head-up-Anzeigevorrichtung nach einem der Ansprüche 1 bis 2, **dadurch gekennzeichnet, dass** das aktive Element (5) sich auf einen aktiven Lichtdiffusor bezieht, eine Folie von der Art in Polymer dispergiertes Flüssigkristall (PDLC) ist.

4. Head-up-Anzeigevorrichtung nach einem der vorhergehenden Ansprüche, **dadurch gekennzeichnet, dass** die Projektionseinrichtung (4) ein Pico-Laserprojektor ist.

5. Head-up-Anzeigevorrichtung nach einem der Ansprüche 1 bis 4, **dadurch gekennzeichnet, dass** das aktive Element (5) vom transmissiven Typ und zwischen der Projektionseinrichtung (4) und den Anzeigebereichen eingerichtet ist.

6. Head-up-Anzeigevorrichtung nach einem der Ansprüche 1 bis 4, **dadurch gekennzeichnet, dass** das aktive Element (5) vom reflektiven Typ und zwischen einem Spiegel und der Projektionseinrichtung (4) eingerichtet ist, wobei der Spiegel den vom aktiven Element kommenden Lichtstrahl auf den optischen Pfad zu den Anzeigebereichen reflektieren kann.

7. Head-up-Anzeigeverfahren, das die Head-up-Anzeigevorrichtung des Anspruchs 1 verwendet, um mindestens ein Bild anzuzeigen, **dadurch gekennzeichnet, dass** es die folgenden Schritte aufweist:
- Erzeugung durch mindestens die Projektionseinrichtung (4) eines mit einem anzuzeigenden Bild geladenen Lichtstrahls;
- Anzeige im Sichtfeld eines Benutzers des Bilds in mindestens dem Nahanzeigebereich und dem Fernanzeigebereich, die im teilweise reflektierenden Bildschirm (7) eingerichtet sind, und
- einen Schritt der Übertragung des von der Projektionseinrichtung (4) emittierten Lichtstrahls abwechselnd vom aktiven Element (5) im Transparenzzustand zum Nahanzeigebereich und im Diffusionszustand zum Fernanzeigebereich.

8. Head-up-Anzeigeverfahren nach dem vorhergehenden Anspruch, **dadurch gekennzeichnet, dass** das Verfahren einen Schritt der Synchronisation der Änderung der Übertragungseigenschaften des Lichts des aktiven Elements (5) abhängig von den Merkmalen des Lichtstrahls enthält.

9. Head-up-Anzeigeverfahren nach einem der Ansprüche 7 oder 8, **dadurch gekennzeichnet, dass**, im Erzeugungsschritt, die Projektionseinrichtung des Lichtstrahls ein fokussiertes sichtbares Licht jenseits des Bildschirms (7) in mindestens einem reflektierenden Teil des Anzeigebereichs emittiert, wobei der Bereich so eingerichtet ist, dass das virtuelle Bild in einem Abstand von mindestens 1 m vom Bildschirm (7) positioniert wird, so dass die Anzeige fern ist.

## Claims

1. Head-up display device, for displaying at least one image, **characterized in that** it comprises:
- a projection means (4) for generating a light beam charged with an image to be displayed;
- a partially reflecting screen (7) comprising at least one near display area and one far display area that are arranged to display said image in the field of vision of a user,
- an active element (5) having properties of being able to alternate between two states, one transparent and the other diffusing, the active element being arranged to receive the light beam from the projection means (4) and transmit it alternately in transparency state to the near display area and in diffusing state to the far display area,
- the near display area relates to an area of the partially reflecting screen (7) comprising luminescent particles suitable for emitting a radiation of a wavelength in the visible range after absorption of the light beam, the far display area positioning a virtual image generated by the light diffused by the active element in diffusing state at a distance of at least one metre from the partially reflecting screen (7).

2. Head-up display device according to the preceding claim, **characterized in that** said active element (5) is linked to a light beam characteristics management module (18) which is capable of synchronizing the variation of the light transmission properties of said active element (5) as a function of said properties.

3. Head-up display device according to either of Claims 1 and 2, **characterized in that** the active element (5) relates to an active light diffuser is a film of the polymer-dispersed liquid crystal (PDLC) type.

4. Head-up display device according to one of the preceding claims, **characterized in that** the projection means (4) is a laser pico projector.

5. Head-up display device according to one of Claims 1 to 4, **characterized in that** the active element (5) is of the transmissive type and is arranged between the projection means (4) and the display areas.

6. Head-up display device according to one of Claims 1 to 4, **characterized in that** the active element (5) is of the reflective type and is arranged between a mirror and the projection means (4), said mirror being suitable for reflecting the light beam originating from the active element on the optical path toward the display areas.

7. Head-up display method, using the head-up display device of Claim 1, for displaying at least one image, **characterized in that** it comprises the following steps:
- generation by at least the projection means (4) of a light beam charged with an image to be displayed;
- display in the field of vision of a user of said image in at least the near display area and the far display area that are arranged in the partially reflecting screen (7),
- a step of transmission of the light beam emitted by the projection means (4) alternately by the active element (5) in transparency state to the near display area and in diffusion state to the far display area.

8. Head-up display method according to the preceding claim, **characterized in that** the method comprises a step of synchronization of the variation of the light transmission properties of said active element (5) as a function of the characteristics of the light beam.

9. Head-up display method according to one of Claims 7 or 8, **characterized in that**, in the generation step, the light beam projection means emits a visible light focused beyond the screen (7) in at least one reflecting display area part, said area being arranged so as to position the virtual image at a distance of at least 1 m from the screen (7), such that the display is far.
